(19) Europäisches Patentamt / European Patent Office / Office européen des brevets

(11) **EP 1 897 670 B1**

(12) **EUROPEAN PATENT SPECIFICATION**

(45) Date of publication and mention of the grant of the patent:
**02.12.2015 Bulletin 2015/49**

(51) Int Cl.:
***B29C 47/02*** *(2006.01)*   ***B32B 15/08*** *(2006.01)*
***B29K 67/00*** *(2006.01)*   ***B29K 105/22*** *(2006.01)*
***B29L 7/00*** *(2006.01)*   ***B29L 9/00*** *(2006.01)*

(21) Application number: **06767459.8**

(22) Date of filing: **21.06.2006**

(86) International application number:
**PCT/JP2006/312842**

(87) International publication number:
**WO 2006/137571 (28.12.2006 Gazette 2006/52)**

(54) **PROCESS FOR PRODUCING LAMINATED METAL SHEET**

VERFAHREN ZUR HERSTELLUNG VON LAMINIERTEM BLECH

PROCESSUS DE PRODUCTION DE FEUILLE DE MÉTAL LAMINÉE

(84) Designated Contracting States:
**DE FR GB NL**

(30) Priority: **21.06.2005   JP 2005180029**
**26.07.2005   JP 2005215528**
**09.08.2005   JP 2005230429**

(43) Date of publication of application:
**12.03.2008   Bulletin 2008/11**

(73) Proprietor: **JFE Steel Corporation**
**Tokyo, 100-0011 (JP)**

(72) Inventors:
• **MORIKAWA, Masahide**
**c/o I.P. Dept. JFE Steel Corp.**
**Tokyo 1000011 (JP)**
• **OSHIMA, Yasuhide**
**c/o I.P. Dept. JFE Steel Corp.**
**Tokyo 1000011 (JP)**

• **KUBO, Hiroshi**
**c/o I.P. Dept., JFE Steel Corp.**
**Tokyo 1000011 (JP)**
• **IWASA, Hiroki**
**c/o I.P. Dept., JFE Stell Corp.**
**Tokyo 1000011 (JP)**
• **YASUE, Yoshihiko**
**c/o I.P. Dept., JFE Steel Corp.**
**Tokyo 1000011 (JP)**

(74) Representative: **Hoffmann Eitle**
**Patent- und Rechtsanwälte PartmbB**
**Arabellastraße 30**
**81925 München (DE)**

(56) References cited:
**EP-A1- 1 331 071    JP-A- 09 066 556**
**JP-A- 10 138 316    US-A- 5 736 086**
**US-A- 5 985 080**

**Description**

Technical Field

The present invention relates to a method for producing a resin-laminated metal sheet.

Background Art

In recent years, resin-laminated metal sheets have been used for cans for food and drink. The term "resin-laminated metal sheets" (hereinafter, also referred to as "laminated metal sheets") refer to metal sheets, such as tin sheets, tin-free steel sheets, and aluminum sheets, covered with thermoplastic resins.

The production of laminated metal sheets requires no exhaust or disposal of solvents used for coating. Furthermore, can washing after can forming is not needed. Thus, wastewater is not generated. Therefore, demands for laminated metal sheets have been increasing as environmentally-friendly products.

Thermocompression bonding in which a thermoplastic resin film is press-bonded to a preheated metal sheet is employed as a main method for producing such a laminated metal sheet.

Recently, direct extrusion lamination including extruding a molten resin from a die or the like, cooling and solidifying the molten resin in air between the die and a metal sheet to form a film, and press-bonding the film to the metal sheet has been developed. This method is a production method using compact and simple equipment compared with the thermocompression bonding. Many reports on this method have been made because production costs should be reduced.

For example, Japanese Unexamined Patent Application Publication No. 57-203545 discloses a method including holding a metal sheet by a heating roller and a cooling roller, supplying a molten resin from a T-die to a nipped area between the cooling roller and the metal sheet, and laminating a resin film (solid film) to the metal sheet.

However, in this method, the temperature of the metal sheet serving as a base for the molten resin cannot be sufficiently increased because of process limitations. The resin supplied is melted directly after the resin is extruded from the T-die but is solidified when the resin arrives at the nipped area; hence, it is difficult to reduce the thickness of the resin at the nipped area. Therefore, the molten resin extruded from the T-die needs to be adjusted so as to have a predetermined thickness before the resin arrives at the nipped area. Furthermore, the flow rate of the molten resin extruded from the T-die is small. The resin is stretched as the resin approaches the nipped area. The moving speed of the resin film at the nipped area is the same as the moving speed of the metal sheet. At a higher speed, the resin film is stretched, easily breaking the resin. Thus, an increase in speed is limited thereto.

Japanese Unexamined Patent Application Publication Nos. 10-138315 and 10-138316 each disclose a method in which a warm roller having a temperature above room temperature and below the melting point of a resin used is disposed for each side of a preheated metal sheet, and a molten resin is supplied from a T-die to a nipped area between the warm roller and the metal sheet to laminate a resin film having the difference in the temperature between both sides.

In the method, although the temperature of the metal sheet can be increased to the melting point or more of the resin, the molten resin needs to be adjusted so as to have a predetermined thickness before the molten resin arrives at the nipped area, thereby easily breaking the molten resin and resulting in difficulty in increasing the speed.

Japanese Unexamined Patent Application Publication No. 2001-121647 discloses a technique in which a pre-roller is disposed between a laminating roller and a T-die. In this technique, a molten resin extruded from the T-die is brought into contact with the pre-roller to form a resin film having the difference in temperature between both sides, and then the resulting film is supplied to a nipped area between the laminating roller and the metal sheet to perform lamination.

In this method, the resin film is not easily broken owing to the pre-roller even when stretched at a relatively high speed. However, the resin film needs to be adjusted so as to have a predetermined thickness. Thus, an increase in speed is limited thereto. The line speed is presumed to be only about 100 to 150 mpm.

As described above, although direct extrusion lamination is a simple production method compared with thermocompression bonding, it is difficult to increase the speed because when the resin passes through the nipped area, the resin is in the form of a solid film. Thus, in the present situation, a significant reduction in production costs is not achieved.

US 5,985,080 relates to a process for producing a resin-metal laminate material by providing a heating zone for a metal substrate, a die for feeding a thermoplastic resin in a film form, a pair of temperate laminate rolls for adhering the thermoplastic resin to at least one surface of the metal substrate, and quenching means for quenching the resulting laminate material, along a passage for the metal substrate, supporting and conveying a molten film of the thermoplastic resin from the die with the corresponding temperate laminate rolls and feeding it to a nipping position between the temperate laminate rolls, and fusing the thin film of the thermoplastic resin to at least one surface of the heated metal substrate by means of the temperate laminate rolls.

In general, thicknesses of thermoplastic resin layers of resin-laminated metal sheets are considerably larger than thermosetting resin layers of resin-coated metal sheets. The reason for this is as follows: In current methods for producing resin-laminated metal sheets, smaller thicknesses reduce material costs but cause rupture of resin layers. Furthermore, resin layers each having a thickness equal to or less than a specific thickness increase process costs, which is not economical. However, in view of cost reduction and the like, it is predicted that resin layers of laminated metal sheets will gradually have smaller thicknesses. In the conventional direct extrusion lamination, a reduction in the thickness of resin layers facilitates rupture. Thus, operations at a lower speed must be performed. That is, difficulty in increasing the speed in the direct extrusion lamination is a future concern as well as the current problem and is thus a fatal shortcoming.

In consideration of the above-described situation, it is an object of the present invention to provide a method for stably producing a laminated metal sheet including a resin layer having a small thickness at a high line speed compared with the conventional method, without spoiling the simplicity of direct extrusion lamination.

Disclosure of Invention

The present invention provides a method for producing a laminated metal sheet, the method including a step of causing a molten resin to pass through a nipped area of a metal sheet being transported in association with rotation of a roller. In this production method, the metal sheet is transported downward in a substantially vertical direction. The method is charactarized in that the resin is a polyester containing 5 to 30 percent by mass of a resin having a melt flow rate, measured according to JIS K7210, of 6 g/10 min or more.

Both the production methods described above preferably include a step of heating the metal sheet before the metal sheet passes through the nipped area.

In the production method described in any one of the embodiments, the thickness of the resin of the laminated metal sheet is preferably controlled by the pressing load of the roller at the nipped area.

In the production method described in any one of the embodiments, the method includes a step of cooling the laminated metal sheet after the laminated metal sheet passes through the nipped area.

In the production method described in any one of the embodiments, preferably, the roller is a metal roller capable of having a surface temperature thereof controlled.

In the production method described in any one of the embodiments, the surface free energy of the roller is preferably 45 mN/m or less.

In the production method described in any one of the embodiments, preferably, the surface of the roller is composed of a material mainly containing at least one selected from the group consisting of resins and carbon.

In the production method described in any one of the embodiments, preferably, the surface of the roller comprises at least one material selected from the group consisting of silicone resins, fluorocarbon resins, and diamond-like carbon.

The production method described in any one of the embodiments preferably includes a step of heating the roller. The surface temperature of the roller is preferably set at a temperature equal to or higher than the glass transition temperature of the resin. Alternatively, the surface temperature of the roller is preferably set at a temperature equal to or higher than the melting point of the resin. Alternatively, the surface temperature of the roller is preferably set at a temperature in the range of the glass transition temperature of the resin to the melting point of the resin.

The production method described in any one of the embodiments preferably includes a step of pressing a temperature-controlled metal roller against the roller so as to control the surface temperature of the roller.

In the production method described in any one of the embodiments, preferably, the melt viscosity of the resin is $10^3$ Pa·s or less.

In the production method described in any one of the embodiments, the resin is a polyester containing 5 to 30 percent by mass of a resin having a melt flow rate of 6 g/10 min or more. The resin having a melt flow rate of 6 g/10 min or more is preferably a resin mainly composed of a polyolefin. More preferably, the polyolefin is a polyolefin modified by a carboxylic acid derivative.

In the production method described in any one of the embodiments, preferably, at least one roller is disposed for each side of the metal sheet.

In the production method described in any one of the embodiments, preferably, the metal sheet is nipped by at least one pair of rollers. In this case, at least one surface of the metal sheet is laminated.

In the production method described in any one of the embodiments, preferably, the metal sheet is nipped by at least one roller and a rigid body. In this case, at least one surface of the metal sheet is preferably laminated.

Brief Description of the Drawings

Fig. 1 shows a known art in which a pre-roller is disposed.

Fig. 2 is a schematic view of the present invention.

Fig. 3 is a fragmentary enlarged schematic view of Fig. 2 and shows the present invention when a molten resin passes through a nipped area.

Fig. 4 shows the placement of an apparatus used in an embodiment of the present invention (EXAMPLE 1).

Fig. 5 shows the placement of an apparatus used in another embodiment of the present invention (EXAMPLE 2).

Fig. 6 shows the placement of an apparatus used in another embodiment of the present invention (EXAMPLE 3).

Fig. 7 shows the placement of an apparatus used in another embodiment of the present invention (EXAMPLE 8).

Best Mode for Carrying Out the Invention

The present invention will be described in detail below.

Details about how the present invention is completed will be described below.

The inventors have conducted intensive studies on the control of the thickness of a resin and high-speed production in direct extrusion lamination. As described above, in the known production method in which a molten resin extruded is controlled so as to be formed into a film having a predetermined thickness before the molten resin arrives at a nipped area, it is difficult to simultaneously achieve an increase in speed and a reduction in thickness. Thus, a method in which the control of the thickness of the film is not required has been studied.

It is considered that the phenomenon of the rupture of a resin in the known direct extrusion lamination is due to the fact that a resin flow cannot follow deformation. In view of this, an increase in fluidity of the resin, i.e., a reduction in viscosity, will reduce the occurrence of rupture. However, in direct extrusion lamination, a reduction in viscosity disadvantageously increases the degree of neck-in. The term "neck-in" refers to a phenomenon in which the width of a resin extruded from a T-die becomes small. This phenomenon becomes pronounced as the resin has lower viscosity.

In the known direct extrusion lamination from that point of view, the resin can have a viscosity range such that no rupture or neck-in occurs. Production at an optimum viscosity of the resin may determine limits of an increase in speed and a reduction in thickness. In fact, the inventors have determined the optimum viscosity of the resin and conducted experiments under the conditions. However, rupture did not prevent without the occurrence of neck-in. That is, an increase in speed and a reduction in thickness were not balanced. From the discussion above, the inventors reached an understanding that the known method had limitations and that a laminating method different from the known method was required to perform lamination without the occurrence of neck-in or rupture.

Meanwhile, it is important to form a thin resin layer from a molten resin (thin-film forming). To achieve such a thin resin layer, it is important to increase laminating speed. From that point of view, a method for performing lamination at higher speed without the occurrence of neck-in or rupture will be discussed again. The occurrence of neck-in is due to the fact that the mechanism of the formation of a thin resin layer is based on tensile deformation. In light of the deformation mechanism, it is natural to reduce the width perpendicular to the stretching direction is reduced. An increase in speed increases the tension to reduce the width, thus causing the above-described problems. It is concluded that in the known method utilizing tension deformation, an increase in speed is difficult in principle. In the known method, although a reduction in viscosity does not easily cause rupture, marked neck-in occurs to produce defective articles. If a completely different principle for an increase in speed, i.e., a mechanism that does not cause neck-in even at a lower viscosity of the resin, is developed, the increase in speed can be achieved.

The inventors have done trial and error, conducted intensive studies, and invented a method for producing a laminated metal sheet, the method including a step of causing a molten resin to pass through a nipped area of a metal sheet being transported in association with rotation of a roller.

The phrase "transported in association with the rotation of the roller" includes cases where the roller serves as a power source for the transport of the metal sheet or where a power source for the transport of the metal sheet is present. For example, the rotation of the roller generally serves as a power source for the transport of the metal sheet. Alternatively, a power source, such as a take-up roller, for the transport of the metal sheet is separately present, and the roller holding the metal sheet rotates in response to the transport of the metal sheet.

The term "a nipped area of a metal sheet" refers to a portion of the metal sheet held by at least one roller and a rigid body. The rigid body is generally another roller but is not particularly limited thereto. Examples thereof include metal components each having a proper curvature and metal components each having a smooth, flat surface. The rigid body may be movable or fixed.

In the following description, the common case where the rigid body is a roller, i.e., the metal sheet is held by a pair of rollers, is exemplified in order to facilitate understanding.

The metal sheet of the present invention may be composed of a metal and is not particularly limited. Examples thereof include steel sheets, tin sheets, tin-free steel sheets, stainless steel sheets, and aluminum sheets. Among these, tin sheets, tin-free steel sheets, and aluminum sheets are suitably used for can production. These metal sheets may be subjected to surface treatment plating, chemical conversion treatment, and electrolytic treatment for forming layers.

The term "molten resin" in the present invention refers to a liquid resin by heat. When the resin is a crystalline resin, naturally, the resin is heated to a temperature equal to or higher than the melting point. Meanwhile, a noncrystalline resin has an indistinct melting point. However, if such a noncrystalline resin is deformed by heat, the noncrystalline resin is treated as a molten resin, as is generally recognized by those skilled in the art. Such a molten resin preferably has a melt viscosity of $10^3$ Pa·s or less. In general, the molten resin having about $0.005 \times 10^3$ Pa·s to $0.2 \times 10^3$ Pa·s.

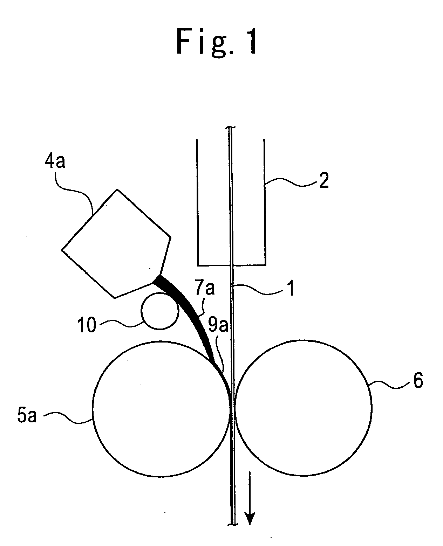

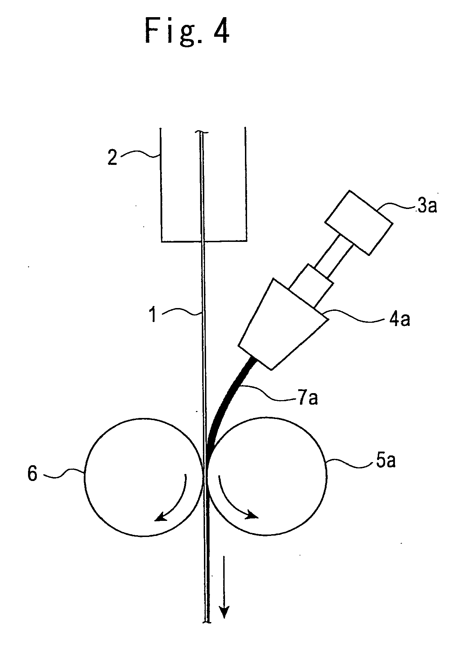

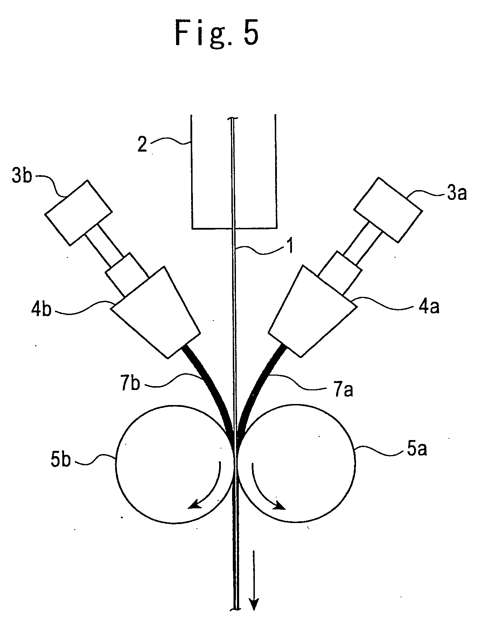

In the known art as described above, basically, a molten resin having a film form is extruded from a T-die or the like. However, when lamination is performed, the molten resin is solidified into a solid film, and then the solid film is press-bonded to the metal sheet. Thus, the metal sheet is heated. However, a pressure roller has a low temperature by cooling, has a temperature equal to room temperature, or has a temperature in the range of room temperature to the melting point of the resin. Fig. 1 shows an example of the known art in which a pre-roller 10 is disposed. The molten resin is cooled with the pre-roller and the pressure roller. Thus, a solid film is obtained at points 7a and 9a. Other reference numerals in Fig. 1 are the same as in Figs. 4 and 5, and the description is thus omitted.

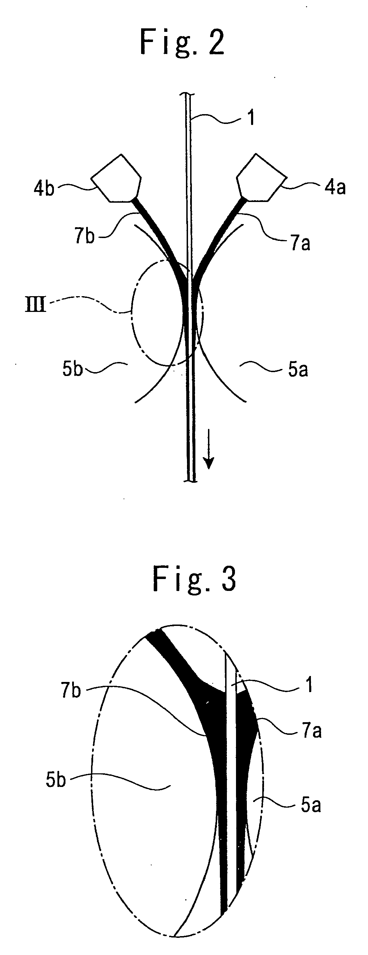

In contrast, as shown in Fig. 2, in the present invention, a molten resin is directly melt-bonded on a metal sheet. That is, in the present invention, a molten resin is supplied from a T-die to a metal sheet and/or a roller so as to extend across the width of the metal sheet and/or the roller, in the same way as in the known art. However, the metal sheet is laminated with not a solid film but the molten resin. This is significantly different from the known art. Fig. 3 is a fragmentary enlarged schematic view of a nipped area shown in Fig. 2. Reference numerals 7a and 7h each represent a liquid resin. In the present invention, a pool of the liquid resin is sometimes observed above the nipped area. In the present invention, ideally, the entire molten resin passing through the nipped area is a liquid. However, a solid resin may be slightly contained within a range in which the advantage of the present invention is not inhibited. Other reference numerals in Figs. 2 and 3 are the same as in Figs. 4 and 5, and the description is thus omitted.

Therefore, in the present invention, the roller is preferably heated in order to easily maintain the molten state of the resin. This technical idea differs absolutely from the known art.

In the present invention, the transport direction of the metal sheet is favorably equal to the flow direction of the molten resin by gravity. Preferably, the transport direction is a substantially vertical downward direction.

In the present invention, to perform melt-bonding, the metal sheet is preferably heated before the metal sheet passes through the nipped area in such a manner that the molten state of the resin is maintained. The resulting resin-laminated metal sheet after passing through the nipped area is preferably cooled before the resin surface comes into contact with a component, such as another roller, in order to stabilize the thickness and structure of the resin and prevent the occurrence of defects.

In the present invention, the thickness of the resin of the laminated metal sheet is preferably controlled by the pressing load of the roller at the nipped area. That is, the application of pressure between the roller and the metal sheet with the molten resin provided therebetween reduces the thickness of the resin by pressure and controls the thickness, thereby facilitating formation of a thin resin layer on a surface of the metal sheet.

According to the present invention, there is no need for consideration of neck-in, and a reduction in the viscosity of the resin does not matter. Furthermore, in the method, an increase in speed can be achieved.

In the present invention, to precisely control the thickness of the molten resin, the molten resin while being pressed is preferably maintained at a sufficiently high temperature, and the metal sheet to be brought into contact with the molten resin is preferably heated in advance. The heating temperature of the metal sheet is not particularly limited. However, from the above-described reason, the temperature is preferably in the range of (the glass transition temperature of the resin +30°C) to (the melting point of the resin +30°C) in such a manner that fluidity is maintained in a suitable range without a reduction in the temperature of the molten resin. For example, when a PET resin is used, the resin temperature is preferably maintained at 100°C to 300°C. The pressing load of the roller (hereinafter, also referred to as "roll force") varies in response to the line speed and physical properties of the resin but is appropriately determined by the lamination thickness of the resin. For example, when the thickness of the resin is about 5 to 15 $\mu$m, the pressing load may be about 50 to 300 T/m per unit width (m).

According to the present invention, since the lamination thickness of the resin is easily controlled by the roll force of the roller, the molten resin need not be adjusted to have a predetermined thickness before the molten resin arrives at the nipped area of the metal sheet. Thus, unlike the known art, the thickness of the molten resin need not be adjusted by stretching the molten resin between the outlet of the T-die and the nipped area, thereby preventing the rupture of the molten resin. Therefore, thin-film lamination can be performed at high speed.

In the present invention, the lamination thickness is determined by adjusting the flow rate of the molten resin passing through the gap between the roller and the metal sheet. Force derived from the passage of the molten resin is applied to the gap between the roller and the metal sheet in the nipped area. To obtain the gap required for achieving a specific lamination thickness, a required pressure may be applied between the roller and the metal sheet. The force generated between the roller and the metal sheet is determined by the line speed of the metal sheet, the viscosity of the molten resin, and the roll force of the roller. The viscosity of the molten resin depends on temperature. When temperatures of the metal sheet and the roller are adjusted, and when the molten resin is maintained at a constant viscosity, the thickness only depends on the roll force of the roller at a specific line speed. That is, the thickness distribution of the resin laminated in the width direction depends on the distribution of the roll force of the roller in the width direction but does not depend on the distribution of the flow rate in the width direction of the molten resin extruded from the T-die. Therefore, the molten resin may be supplied to the nipped area of the roller and the metal sheet in an amount equal to or larger than an amount required to obtain the lamination thickness.

To obtain a uniform thickness in the width direction of the metal sheet, preferably, at least one roller is disposed for each side of the metal sheet.

In consideration of the deflection of the roller due to the roll force and thermal crown, the roller has a crown shape in advance. In addition to the roller, a backup roller may be disposed so as to prevent the deflection of the roller. A lamination thickness in response to the roll force of the roller can be obtained by supplying the molten resin extruded from the T-die to the nipped area of the metal sheet while the roller rotates in the same direction as the transport direction of the metal sheet.

In the present invention, the metal sheet is nipped by the at least one pair of rollers, and at least one surface of the metal sheet is laminated. In other words, at least one roller is disposed for each side of the metal sheet. Lamination is performed by melt-bonding the resin to each side of the metal sheet. That is, both sides of the metal sheet are simultaneously laminated.

In the present invention, the roller is preferably a metal roller capable of having a surface temperature thereof controlled. This eliminates nonuniformity in the temperature of the molten resin supplied, thus precisely controlling the temperature of the molten resin present between the roller and the metal sheet and precisely controlling the lamination thickness.

To more precisely control the thickness of the molten resin present between the metal sheet and the roller by the roll force of the roller, the molten resin preferably has a sufficiently high temperature while the roll force is applied. Thus, the roller preferably has a higher surface temperature similar to the metal sheet. Preferably, the roller has a surface temperature equal to or higher than the glass transition temperature of the resin laminated.

In the case where the roller has a surface temperature equal to or higher than the melting point of the resin to be laminated, the molten resin on the roller does not solidify. Thus, the molten resin need not be directly supplied to the nip area of the metal sheet. The molten resin may be supplied onto the roller and then transported to the nip area along with the rotation of the roller. This simplifies, for example, an adjusting operation when the molten resin is extruded from the T-die, thereby resulting in more stable operation.

Advantages in the case where the surface temperature of the roller is set at a temperature equal to or lower than the melting point of the resin and preferably in the range of the glass transition temperature of the resin to the melting point of the resin are described below.

When the roller has a surface temperature equal to or higher than the glass transition temperature of the resin, the fluidity of the resin on the roller surface is easily retained. When the roller has a surface temperature equal to or lower than the melting point of the resin, the temperature of the contact interface between the roller and the resin can be controlled to a temperature equal to or lower than the melting point of the resin, thus facilitating suppression of adhesion of the resin to the roller.

Any material constituting the roller of the present invention may be used. In particular, the roller composed of a metal is preferred because of excellent controllability. The metal roller preferably has, for example, a chromed surface that sufficiently withstands a high temperature. Preferably, the degree of the surface roughness, for example, a mirror-finished surface or matte-finish surface, can be changed in response to applications of a laminated steel sheet because the surface shape of the roller is transferred to a surface of the laminated steel sheet.

In the present invention, when the resin is stretched by the roll force of the roller so as to reduce the thickness, preferably, the resin does not easily adhere to the roller. The inventors have conducted various studies and have found that a nonadhereant material having low surface free energy is preferred as a material for the surface of the roller that comes in contact with the resin. For example, it is found that the use of a material mainly composed of a resin or carbon advantageously results in a reliable production of a laminated metal sheet without defects.

In the present invention, the surface free energy of the roller is preferably 45 mN/m or less.

To achieve a surface free energy of 45 mN/m or less, for example, a material having a surface free energy of 45 mN/m or less is used as the material for the surface of the roller. For example, a material mainly composed of a resin and/or carbon is preferred. The term "mainly" refers to a base material except a component incorporated as an additive, the base material content of the surface of the roller being 70% by volume or more. For example, in the case where glass fiber is generally incorporated as a reinforcing material in a resin, the additive content is less than 30% by volume.

In particular, a polyester resin which is used as a resin layer used for the laminated metal sheet has a surface free energy of about 40 to 45 mN/m. When the material of the roller has a surface free energy equal to or less than that of polyester resin, adhesion of the molten resin to the roller hardly occurs. To further suppressing the possibility of the occurrence of adhesion of the resin to the roller, more preferably, the roller has a surface free energy of 35 mN/m or less.

In addition to satisfying the requirement of the surface free energy, preferably, the material for the surface of the roller has thermostability to the extent that the roller can be continuously used at 200°C or higher, chemical resistance to the extent that the roller withstands a solvent and the like for cleaning, mechanical strength, and durability because the material is exposed to a high-temperature molten resin for prolonged periods of time. Preferred examples of the material include silicone reins and fluorocarbon resins. Among these, silicone resins are more preferred because they have excellent heat resistance and durability.

Furthermore, to enhance the durability of the resin as the material of the surface of the roller, the resin may contain an inorganic or organic filler. Alternatively, the surface of the resin may be subjected to physical treatment such as plasma irradiation. Furthermore, the resin may be coated with, for example, carbon.

Diamond-like carbon (DLC) may also be used as a material having low surface free energy, outstanding heat resistance, durability, and mechanical strength. In particular, when a polyester resin is used as the resin layer of the laminated metal sheet, DLC having excellent heat resistance and durability is ideally used as the material of the surface of the roller because the polyester resin has a high melting temperature and adheres easily to another material. DLC is suitably formed by plasma-enhanced chemical vapor deposition (CVD) on a metal roller having excellent heat resistance and durability.

The surface free energy of the surface of the roller is measured as follows.

Surface free energy $\gamma s$ is divided into two components as described below.

$$\gamma s = \gamma sd + \gamma sh$$

In the surface free energy, $\gamma sd$ represents a variance component due to Van der Waals forces and London forces. $\gamma sh$ represents a polar component associated with, for example, the force of the hydrogen bond of a polar group and the force of an acid-base interaction. In the case where a contact angle is represented by $\theta$ when a liquid is dropped on the surface of the roller, the surface free energy of the liquid is represented by $\gamma l$, the variance component thereof is represented by $\gamma ld$, and where the polar component thereof is represented by $\gamma lh$, the following equation is satisfied:

$$(\gamma sh)^{1/2} = -(\gamma ld/\gamma lh)^{1/2} * (\gamma sd)^{1/2} + \gamma l/(\gamma lh)^{1/2} * (1 + \cos\theta)/2$$

Five liquids (deionized water, glycerin, formamide, ethylene glycol, and diethylene glycol) each having known surface free energy ($\gamma l$, $\gamma lh$, and $\gamma ld$ are known) are each dropped on a surface of an object (surface of the roller), the contact angle $\theta$ of each of the liquids is measured at a humidity of 55% to 65% and a temperature of 20°C. The resulting values of the contact angle $\theta$, $\gamma l$, $\gamma lh$, and $\gamma ld$ of each of the five liquids are substituted into the equation. $\gamma sd$ and $\gamma sh$ are determined by the method of least squares. The surface free energy $\gamma s$ of the surface of the roller is indicated by the sum of $\gamma sd$ and $\gamma sh$. Table 1 shows $\gamma lh$, $\gamma ld$, and $\gamma l$ of each of the liquids.

Table 1

|  | $\gamma lh$ | $\gamma ld$ | $\gamma l$ |
|---|---|---|---|
| Deionized water | 21.5 | 50.3 | 71.8 |
| Glycerin | 34.0 | 30.0 | 64.0 |
| Formamide | 39.5 | 18.7 | 58.2 |
| Ethylene glycol | 32.8 | 15.2 | 48.0 |
| Diethylene glycol | 38.1 | 6.7 | 44.8 |

To strictly control the surface temperature of the roller, more preferably, the temperature of the roller is indirectly controlled by bringing a temperature-controlled metal roller into contact with the roller.

In the description above, a pair of rollers is used. One of the rollers may be a rigid body. In this case, all of the preferred embodiments of the above-described roller may be applied as preferred embodiments of the rigid body.

Furthermore, in the case where the metal sheet is nipped by at least one roller and the rigid body, the molten resin is passed through the nipped area of each side of the metal sheet to simultaneously laminate both sides of the metal sheet with the resin.

The resin used in the present invention is a polyester resin. A polyester resin mainly composed of polyethylene terephthalate is suitable for a material for a container.

A resin having lower viscosity is useful to increase line speed and to reduce thickness of the resin layer. An example of the resin having low viscosity is a polyester resin having a low molecular weight or a large number of branches. Such a polyester resin has degraded processability and mechanical properties such as impact resistance.

The inventors have conducted studies and have found that a low-viscosity resin having a melt flow rate of 6 g/10 min or more is effectively added as an additive to a polyester resin. That is, in the present invention, the resin is a polyester containing 5 to 30 percent by mass of the resin having a melt flow rate of 6 g/10 min or more.

A 5 percent by mass or more of the low-viscosity resin having a melt flow rate of 6 g/10 min or more sufficiently reduced the viscosity of the polyester resin. A 30 percent by mass or less improves processability, heat resistance, and the like. Thus, 5 to 30 percent by mass is preferred. Desirably, the use of a resin having a melt flow rate of 20 g/10 min or more apparently improves a uniformity in thickness. The upper limit of the melt flow rate is not particularly limited. A resin having a melt mass-flow rate of 1,000 g/10 min or less is suitable as a resin commonly used for extrusion. The melt mass-flow rate was measured according to JIS K7210.

Any low-viscosity resin may be used as long as it is a thermoplastic resin satisfying the viscosity requirement described above. However, in the case where the resin is used for a container for foods, a resin appropriate for food safety is preferred. Examples thereof include polyester resins, polyolefin resins, fluorine-containing resins, nylon resins, and silicone resins. In particular, a polyolefin resin is not dissolved in a polyester resin or does not form a compound. Thus, such a polyolefin resin is preferred because the polyolefin resin can reduce viscosity without the degradation in mechanical properties of a polyester resin. The term "polyolefin resins" refer to resins each prepared by vinyl polymerization of a molecule having a carbon double bond therein, such as ethylene or propylene. Examples of the polyolefin resins include polyethylene, polypropylene, polybutene, polymethylpentene, and polystyrene.

A polyolefin resin modified with a carboxylic acid derivative is preferred because the resin can reduce viscosity without a change in molecular weight and can improve mechanical properties, such as impact resistance and strength, owing to a high affinity to a polyester resin. Such a modified polyolefin resin is dispersed as minute particles in a polyester resin to cushion an impact, improving mechanical properties. In particular, more preferably, a polyolefin resin particles having an equivalent spherical diameter of 0.1 to 5 $\mu$m are dispersed in a polyester resin.

A polyolefin resin preferably has a glass transition point (also referred to as "glass transition temperature") of 0°C or lower and more preferably -30°C or lower. A glass transition temperature exceeding 0°C slightly degrades impact resistance, in particular, significantly degrades impact resistance at low temperatures. Preferably, the Young's modulus is 250 MPa or less at room temperature, and breaking elongation is 200% or more. More preferably, the Young's modulus is 100 MPa or less, and breaking elongation is 500% or more. The molecular weight is not particularly limited. The number-average molecular weight is preferably in the range of $2 \times 10^3$ to $1 \times 10^6$. This range results in sufficient mechanical properties and impact resistance and satisfactory processability.

The content of a -(C=O)-O- functional group (hereinafter, also referred to as a "carbo-oxy" group) introduced by modification with a carboxylic acid derivative is in the range of 2 to 20 percent by mass and preferably 3 to 12 percent by mass in terms of the carboxylic acid derivative. In this composition range, an affinity to the polyester resin and dispersibility in the polyester resin are maximally increased. A higher affinity of the modified polyolefin resin to the polyester resin as a matrix results in a higher effect of reducing an interphase fracture between different resins when the resin receives an impact. As a result, the impact resistance of the modified polyolefin is increased. Furthermore, the aggregation of the modified polyolefin particles is suppressed during processing, thereby improving variations in performance according to process conditions.

A method for producing a polyolefin modified with a carboxylic acid derivative will be described below. The carboxylic acid derivative is a compound having a carbo-oxy group. Examples thereof include carboxylic acids, carboxylates, and metal salts of carboxylic acids. A polyolefin modified with a carboxylic acid derivative is prepared by copolymerization, graft polymerization, or block polymerization of a monomer having a carbo-oxy group and a polyolefin resin.

Specific examples of a monomer having a functional group derived from a carboxylic acid include unsaturated carboxylic acids each having 3 to 8 carbon atoms, such as acrylic acid, methacrylic acid, vinyl acetate, vinyl propionate, maleic acid, maleic anhydride, itaconic acid, and monomethyl maleate; and metal salts prepared by entirely or partially neutralizing these acids with cations of mono- and di-valent metals, such as sodium, potassium, lithium, zinc, magnesium, and calcium. The degree of neutralization is preferably 20% to 80% and more preferably 30% to 70%. A composition composed of a modified polyolefin having such a degree of neutralization has excellent melt-extrusion properties.

Examples of carboxylate include methyl acrylate, methyl methacrylate, ethyl acrylate, ethyl methacrylate, n-propyl acrylate, n-propyl methacrylate, isobutyl acrylate, isobutyl methacrylate, n-butyl acrylate, n-butyl methacrylate, 2-hydroxyethyl acrylate, 2-hydroxyethyl methacrylate, monomethyl maleate, glycidyl acrylate, glycidyl methacrylate, vinyl acetate, acrylamine, and acrylamide.

Polyolefins modified with carboxylic acid derivatives are prepared by copolymerization, block polymerization, or graft polymerization of these carboxylic acid derivatives with olefin monomers, such as ethylene, propylene, 1-butene, 1-pentene, isobutene, isobutylene, butadiene, styrene, and acrylonitrile. Among these, in particular, polyolefins containing carboxylic acid prepared by graft polymerization or copolymerization have high performance. A commercially available resin may be used as such a modified polyolefin. Examples thereof include Modiper A (manufactured by NOF corporation), Nucrel (manufactured by Du Pont-Mitsui Polychemicals Co., Ltd.), Bondain (manufactured by Sumitomo Chemical Co., Ltd.), Adomer (manufactured by Mitsui Chemicals Inc.), and Toughtech (manufactured by Asahi Kasei Corporation).

In addition, carboxylic acids partially neutralized with metal salts may be used. Such resins have slightly degraded processability but higher impact resistance. An example of such a commercially available resin is Himilan (manufactured by Du Pont-Mitsui Polychemicals Co., Ltd). Furthermore, when a carboxylic acid-modified polyolefin resin is melt-dispersed in a polyester resin, zinc oxide or calcium hydroxide is added thereto. As a result, carboxylic groups in the modified polyolefin resin are neutralized with the metal ions, thereby forming a resin having a structure in which a carboxylic acid-modified polyolefin resin containing carboxylic acid groups partially neutralized with the metal salt is dispersed in the polyester resin.

In particular, a metal-free non-neutralized polyethylene resin prepared by copolymerization with methacrylic acid or acrylic acid is most preferred. A metal-neutralized resin tends to have a viscosity higher than the metal-free non-neutralized polyethylene resin, provided that the metal neutralized resin having the same molecular weight as the metal-free non-neutralized polyethylene resin. Furthermore, the viscosity of a polyester resin mixed with the metal-neutralized resin may increase with time, thereby possibly adversely affecting production. Acrylate-modified polyolefin resins and other carboxylic acid-modified polyolefin resins each have a low affinity to a polyester resin compared with the metal-free non-neutralized polyethylene resin prepared by copolymerization with methacrylic acid or acrylic acid and thus each have a small effect of improving mechanical properties.

A thermoplastic polyester resin mainly constituting the resin layer of the laminated metal sheet will be described below. Polyester resins for use in cans for carbonated drinks need to satisfy the following requirements: for example, (1) to have satisfactory adhesion to metal sheet, and no reduction in adhesion to the metal sheet or no degradation due to deformation, such as elongation and compression, and friction caused by processing in can production; (2) no occurrence of detachment, shrinkage, cracks, pinholes, or the like by heating, such as drying after can production, printing, baking, and retort sterilization (high-temperature and high humidity treatment at about 120°C); (3) no occurrence of cracks or detachment by impacts applied to cans; (4) no occurrence of corrosion or detachment when the resins are in contact with various contents; and (5) no occurrence of white turbidity. In addition, resin layers are required not to absorb flavor components of contents of cans. Furthermore, smells of the resin layers and components eluted from the resin layers is also required not to impair the flavor of contents.

In the present invention, examples of the thermoplastic polyester resins satisfying the requirements include resins prepared by polymerization or copolymerization of acid components, such as various aromatic dicarboxylic acids and aliphatic dicarboxylic acids, and glycol components, such as various aliphatic diols and aromatic diols; and mixtures of two or more polyester resins prepared by copolymerization and having different compositions.

Terephthalic acid or isophthalic acid is preferred as the acid component. Examples of the acid component usable other than terephthalic acid and isophthalic acid include phthalic acid, 1,4-naphthalenedicarboxylic acid, 2,3-naphthalenedicarboxylic acid, 2,6-naphthalenedicarboxylic acid, 2,7-naphthalenedicarboxylic acid, 4,4'-biphenyldicarboxylic acid, diphenic acid, diphenyl ether carboxylic acid, 5-sulfoisophthalic acid, diphenoxyethanedicarboxylic acid, adipic acid, oxalic acid, malonic acid, succinic acid, malic acid, citric acid, glutaric acid, dimer acid, pimelic acid, suberic acid, azelaic acid, sebacic acid, dodecadionic acid, and trans-1,4-cyclohexanedicarboxylic acid.

The glycol components used are prepared by polymerization or copolymerization of various aliphatic diols and aromatic diols. Examples thereof include ethylene glycol, propylene glycol, 1,4-butanediol, 1,3-butanediol, 1,2-butanediol, neopentyl glycol, pentamethylene glycol, hexamethylene glycol, diethylene glycol, triethylene glycol, tetraethylene glycol, polyethylene glycol, trans-1,4-cyclohexanedimethanol, cis-1,4-cyclohexanedimethanol, bisphenols, p-xylene glycol, hydroquinone, 2,2-bis(4-$\beta$-hydroxyethoxyphenyl)propane, and hydrogenated bisphenol A. In particular, a component mainly composed of ethylene glycol, 1,4-butanediol, and/or 1,4-cyclohexanedimethanol is preferred because of a balance between mechanical properties and flavor properties.

A resin mainly composed of terephthalic acid and ethylene glycol; terephthalic acid, isophthalic acid, and ethylene glycol; terephthalic acid, ethylene glycol, and 1,4-butanediol; and/or terephthalic acid, ethylene glycol, and 1,4-cyclohexanedimethanol is suitable as the polyester resin from the viewpoint of mechanical properties in a state of a resin mixture.

The polyester resin may further contain a small amount, e.g., 2 percent by mass, of a constitutional unit derived from a polyfunctional compound, such as trimesic acid, pyromellitic acid, trimethylolethane, trimethylolpropane, trimethylolmethane, or pentaerythritol within a range in which the object of the present invention is not impaired.

A resin suitable for lamination is obtained by incorporating a low-viscosity resin into a polyester resin. Examples of a dispersing method include a method in which a monomer for constituting a polyester resin is polymerized in a solution containing the monomer and low-viscosity resin particles having a primary particle size of 1 $\mu$m or less to produce a polyester resin containing the low-viscosity resin particles are dispersed in the polyester resin; and a method in which two resins are melt-mixed, and a low-viscosity resin is formed into particles by mechanical shearing force. Alternatively, the resins may be melt-mixed in an extruder when extrusion is performed. Examples of an apparatus for mixing or melting the resins include mixers, such as tumbler blenders, Henschel mixers, and twin-shell blenders; single- or twin-screw extruders; melt-mixing apparatuses, such as kneaders and Banbury mixers.

The polyester resin suitably used as a main component in the present invention has an intrinsic viscosity of 0.3 to 2.0 dl/g, preferably 0.3 to 1.5 dl/g, and more preferably 0.5 to 1.0 dl/g. At an intrinsic viscosity of 2.0 dl/g or less, the polyester resin is easily mixed with the above-described low-viscosity resin because of the low viscosity of the polyester resin, thus easily obtaining uniform dispersion of the resin. Therefore, the effect of the present invention is sufficiently exerted. At an intrinsic viscosity of 0.3 dl/g or more, the polyester resin has higher mechanical strength. This contributes to the strength of the product. The intrinsic viscosity (IV) is determined according to JIS K7367-5. That is, measurement is performed at a concentration of 0.005 g/ml in o-chlorophenol at 25°C. Then the intrinsic viscosity is calculated with the following equation: intrinsic viscosity = $(T-T0)/(T0 \times C)$, where C represents a concentration in terms of the number of grams of a resin in 100 ml of a solution; T0 represents the time of flow of a solvent in a capillary viscometer; and T represents the time of flow of a resin solution in a capillary viscometer.

In addition, the polyester resin used in the present invention preferably has a glass transition temperature (Tg) of 50°C to 100°C and more preferably 60°C to 80°C. At a glass transition temperature of 50°C or higher, the polyester resin has higher heat resistance; hence, the polyester resin hardly suffer damage from an increase in temperature during processing. While, at a glass transition temperature of 100°C or lower, the polyester resin has an excellent processability. The polyester resin usually has a cold crystallization temperature (Tc) of 120°C to 210°C and preferably 140°C to 200°C. The polyester resin usually has a melting point (Tm) of 210°C to 265°C and preferably 220°C to 260°C. At a cold crystallization temperature of 120°C or higher, crystallization does not easily occur, thus preventing the occurrence of cracks in and detachment of the polyester resin in retort sterilization and the like. At a cold crystallization temperature of 210°C or lower, the polyester resin has excellent processability and high mechanical strength such as impact resistance.

At a melting point of 210°C or higher, the resin is not easily degraded by heat in processing, thus facilitating prevention of the occurrence of cracks and pinholes. At a melting point of 265°C or lower, crystallization does not proceed easily by heat treatment, such as drying, printing, and baking, in processing, thus facilitating prevention of the occurrence of cracks and pinholes. The above-described glass transition temperature, the cold crystallization temperature, and the crystal melting temperature are measured with a differential scanning calorimeter (DSC) and are determined by measuring endothermic peaks obtained during a heating period at a sample weight of 10 mg and a heating rate of 10°C/min.

EXAMPLE 1 (REFERENCE - NOT IN ACCORDANCE WITH INVENTION)

Fig. 4 shows the placement of an apparatus used in an embodiment of the present invention. In Fig. 4, the apparatus includes a preheater 2 for heating a metal sheet 1 in advance, an extruder 3a for extruding a thermoplastic resin 7a, a T-die 4a, a roller 5a for melt-bonding the thermoplastic resin 7a extruded from the extruder 3a through the T-die 4a with the metal sheet 1, and a support roller 6 for supporting the roller 5a.

In this example, the metal sheet 1 is heated with the preheater 2 and enters between the heated roller 5a and the support roller 6. The molten thermoplastic resin 7a extruded from the extruder 3a through the T-die 4a is supplied to an area between the heated roller 5a and the metal sheet 1 or is supplied onto the heated roller 5a. The supplied molten thermoplastic resin 7a is melt-bonded to a surface of the metal sheet 1 to perform lamination. In this case, the thickness of the resin of the laminated metal sheet is controlled by adjusting the roll force of the heated roller 5a to stably perform thin-film lamination.

A steel sheet subjected to electrolytic chromic acid treatment and having a thickness of 0.2 mm and a width of 200 mm was used as the metal sheet 1. A polyethylene terephthalate was used as the thermoplastic resin 7a. An induction heating metal roller having satisfactory temperature controllability was used as each of the roller 5a and the support roller 6. The line speed was set at 200 mpm. The temperature of polyethylene terephthalate extruded from the T-die was set at 270°C. When the lamination thickness was set at 5 $\mu$m, the roll force of the heated roller was adjusted to 21 T (for a width of 200 mm). When the lamination thickness was set at 10 $\mu$m, the roll force of the heated roller was adjusted to 17 T (for a width of 200 mm). The temperature of the heated roller 5a was adjusted to 230°C. After lamination, the resulting sheet was cooled to room temperature with a cooling unit (not shown) disposed downstream of the heated roller, dried, and wound.

In the resulting laminated steel sheet, each resin layer was not broken, and the thickness of each resin layer was controlled. Furthermore, the resulting laminated steel sheets were subjected to deep drawing to form deep-drawn cans each having a drawing ratio of 2.8. Then the performance of adhesion and corrosion resistance was evaluated.

Adhesion was evaluated by detachment of the film at a flange of each deep-drawn can. The can was accepted when the film detached from the top of the can had a length of less than 0.5 mm. Corrosion resistance was evaluated as follows: The middle portion of the body of the can was cut into a 5 cm $\times$ 5 cm square sample. The sample was distorted by dropping a hard sphere having a weight of 500 g onto the center area of the sample at a temperature of 5°C. The resulting sample was immersed in 100 ml of an aqueous solution containing 1.5% citric acid and 1.5% sodium chloride at 38°C for a week. The amount of iron eluted was quantitatively determined by chemical analysis. The evaluation was made on the basis of the amount eluted. The can was accepted when the amount of iron eluted was 0.1 ppm or less.

In EXAMPLE 1, the results demonstrated that no detachment of the film at the flange was observed and that the can had satisfactory adhesion. In the corrosion resistance test, the results demonstrated that the amount of iron eluted was 0.03 ppm and that the can had excellent corrosion resistance.

EXAMPLE 2 (REFERENCE - NOT IN ACCORDANCE WITH INVENTION)

Fig. 5 shows the placement of an apparatus used in another embodiment of the present invention. Referring to Fig. 5, at least one roller 5a or 5b is disposed for each side of the metal sheet 1. Extruders 3a and 3b with T-dies 4a and 4b for extruding a thermoplastic resins 7a and 7b to both sides of the metal sheet are disposed. The other structure is the same as in Fig. 4. Therefore, the same elements are designated using the same reference numerals, and redundant description is not repeated.

Referring to Fig. 5, the thermoplastic resins 7a and 7b are laminated on both sides of the metal sheet 1. In the resulting laminated metal sheets, each resin layer was not broken, and the thickness of each resin layer was controlled, as in EXAMPLE 1. Furthermore, adhesion and corrosion resistance of each laminated metal sheet were evaluated as in EXAMPLE 1, provided that the evaluation was performed for both front and back sides.

With respect to adhesion, the results demonstrated that no detachment of the film at the flange was observed in both front and back sides and that the can had satisfactory adhesion. In the corrosion resistance test, the results demonstrated that amounts of iron eluted were 0.02 ppm (front side) and 0.03 ppm (back side) and that the can had excellent corrosion resistance.

EXAMPLE 3 (REFERENCE - NOT IN ACCORDANCE WITH INVENTION)

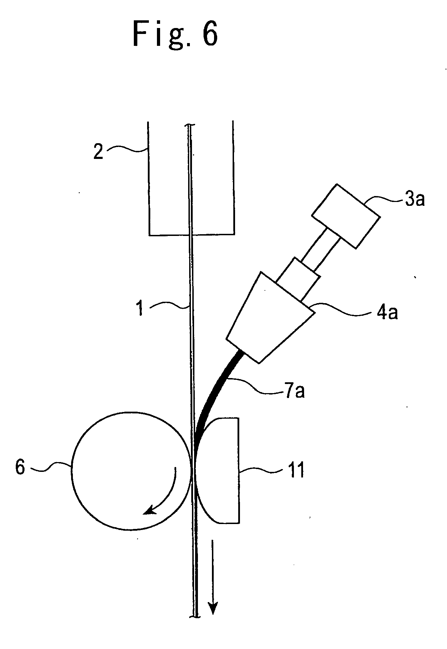

Fig. 6 shows the placement of an apparatus used in another embodiment of the present invention. In Fig. 6, a rigid body 11 was used in place of the heated roller 5a in Fig. 4. The other structure is the same as in Fig. 4. Therefore, the same elements are designated using the same reference numerals, and redundant description is not repeated.

Referring to Fig. 6, the rigid body 11 is adjacent to a side of the metal sheet 1. The lamination thickness of the thermoplastic resin 7a extruded from the extruder 3a through the T-die 4a was controlled by adjusting the pressing load of the rigid body 11. The rigid body 11 is composed of a metal and has a width of 300 mm. The rigid body 11 has a curved surface on the metal sheet side thereof.

The lamination thickness was adjusted in the range of 5 to 10 $\mu$m by appropriately changing the pressing load of the rigid body 11. In the resulting laminated metal sheet, the resin layer was not broken, and the thickness of the resin layer was controlled, similar to EXAMPLES 1 and 2. Furthermore, adhesion and corrosion resistance of the laminated metal sheet were evaluated as in EXAMPLE 1.

With respect to adhesion, the results demonstrated that no detachment of the film at the flange was observed and that the can had satisfactory adhesion. In the corrosion resistance test, the results demonstrated that the amount of iron eluted was 0.05 ppm and that the can had excellent corrosion resistance.

EXAMPLE 4 (REFERENCE - NOT IN ACCORDANCE WITH INVENTION)

In this example, the apparatus shown in Fig. 4 was used, and the following elements were used. A steel sheet subjected to electrolytic chromic acid treatment and having a thickness of 0.3 mm and a width of 900 mm was used as the metal sheet 1. A high density polyethylene resin (HDPE, MFR = 3.0) was used as the thermoplastic resin 7a. An induction heating metal roller having satisfactory temperature controllability was used as each of the roller 5a and the support roller 6. The rollers each had a surface composed of a silicone resin. The adjustment of the surface of each roller was performed by a method in which the periphery of each roller was coated with a molten silicone resin and then polished. First, the surface of each metal roller was cleaned by sandblasting. Then an epoxy resin adhesive was applied to the surface. The resulting surface was coated with the molten silicone resin. Polishing was performed until the thickness reached 20 mm. The surface free energy of the surface of each roller was 38 mN/m.

In this apparatus, the line speed was set at 200 mpm. The temperature of HDPE extruded from the T-die was set at 250°C. When the lamination thickness was set at 5 $\mu$m, the roll force of the roller was adjusted to 95 T (for a width of 900 mm). When the lamination thickness was set at 10 $\mu$m, the roll force of the roller was adjusted to 100 T (for a width of 900 mm). The surface temperature of the roller was adjusted to 80°C. After lamination, the resulting sheet was cooled with a cooling unit (not shown) disposed downstream of the heated roller, dried, and wound.

In both resulting laminated steel sheets having lamination thicknesses of 5 and 10 $\mu$m, each resin layer was not broken, and the thickness of each resin layer was controlled. Furthermore, no defect was observed on the surface of each laminated metal sheet.

The resulting laminated steel sheet was subjected to deep drawing to form deep-drawn cans each having a drawing ratio of 2.8. Then the performance of adhesion and corrosion resistance was evaluated.

Adhesion and corrosion resistance of the laminated metal sheets were evaluated as in EXAMPLE 1. In the corrosion resistance test, the amount of iron eluted was quantitatively determined by atomic absorption spectrometry. The can was accepted when the amount of iron eluted was 0.2 ppm or less.

The results demonstrated that no detachment of the film at the flange was observed in both samples and that the samples had satisfactory adhesion. In the corrosion resistance test, the results demonstrated that amounts of iron eluted were 0.14 ppm (thickness: 5 $\mu$m) and 0.06 ppm (thickness: 10 $\mu$m) and that the samples had excellent corrosion resistance.

EXAMPLE 5 (PREFERENCE - NOT IN ACCORDANCE WITH INVENTION)

An experiment was conducted as in EXAMPLE 4, except that a fluorocarbon resin having a surface free energy of 33 mN/m on the surface of the roller was used as the material constituting the surface of the roller. The adjustment of the surface of each roller was performed by a method in which the periphery of each roller was coated with a molten polytetrafluoroethylene (PTFE) and then polished. First, the surface of each metal roller was cleaned by sandblasting. Then an epoxy resin adhesive was applied to the surface. The resulting surface was coated with the molten PTFE resin. Polishing was performed until the thickness reached 20 mm.

In both resulting laminated steel sheets having lamination thicknesses of 5 and 10 $\mu$m, each resin layer was not broken, and the thickness of each resin layer was controlled. Furthermore, no defect was observed on the surface of each laminated metal sheet.

The performance of adhesion and corrosion resistance of the resulting laminated steel sheets was evaluated as in EXAMPLE 4.

The results demonstrated that no detachment of the film at the flange was observed in both samples and that the samples had satisfactory adhesion. In the corrosion resistance test, the results demonstrated that amounts of iron eluted were 0.10 ppm (thickness: 5 $\mu$m) and 0.05 ppm (thickness: 10 $\mu$m) and that the samples had excellent corrosion resistance.

EXAMPLE 6 (REFERENCE - NOT IN ACCORDANCE WITH INVENTION)

In this example, the apparatus shown in Fig. 5 was used, and the following elements were used. The rollers 5a and 5b were each composed of a silicone resin. The adjustment of the surface of each roller was performed by the same method as in EXAMPLE 4, the method including coating the periphery of each roller with a molten silicone resin. The surface free energy of the surface of each roller was 33 mN/m. A steel sheet subjected to electrolytic chromic acid treatment and having a thickness of 0.2 mm and a width of 900 mm was used as the metal sheet 1. A polyethylene terephthalate resin (IV = 0.70) was used as the thermoplastic resin 7 applied to each side.

In this apparatus, the line speed was set at 200 mpm. The temperature of polyethylene terephthalate resin extruded from the T-die was set at 270°C. When the lamination thickness was set at 5 $\mu$m, the roll force of the heated roller was adjusted to 104 T (for a width of 900 mm). When the lamination thickness was set at 10 $\mu$m, the roll force of the heated roller was adjusted to 85 T (for a width of 900 mm). The surface temperature of each roller was adjusted to 180°C. After lamination, the resulting sheet was cooled to room temperature with a cooling unit (not shown) disposed downstream of the heated roller, dried, and wound.

According to this example, the polyethylene terephthalate resin can be laminated on both sides of the metal sheet 1. In the resulting laminated metal sheets, each resin layer was not broken, and the thickness of each resin layer was controlled. Furthermore, no defect was observed on the surface of each laminated metal sheet. Adhesion and corrosion resistance of each laminated metal sheet were evaluated as in EXAMPLE 4, provided that the evaluation was performed for both front and back sides.

With respect to adhesion, the results demonstrated that no detachment of the film at the flange was observed in both front and back sides and that the can had satisfactory adhesion. In the corrosion resistance test, the results demonstrated that amounts of iron eluted were 0.08 ppm (front side) and 0.08 ppm (back side) at a thickness of 5 $\mu$m. The results demonstrated that amounts of iron eluted were 0.04 ppm (front side) and 0.03 ppm (back side) at a thickness of 10 $\mu$m. That is, excellent corrosion resistance was obtained.

EXAMPLE 7 (REFERENCE - NOT IN ACCORDANCE WITH INVENTION)

An experiment was conducted as in EXAMPLE 6, except that a fluorocarbon resin having a surface free energy of 33 mN/m on the surface of the roller was used as the material constituting the surface of each of the rollers 5a and 5b. The adjustment of the surface of the roller was the same as in EXAMPLE 5.

In both resulting laminated steel sheets having lamination thicknesses of 5 and 10 $\mu$m, each resin layer was not broken, and the thickness of each resin layer was controlled. Furthermore, no defect was observed on the surface of each laminated metal sheet.

The performance of adhesion and corrosion resistance of the resulting laminated steel sheets was evaluated as in EXAMPLE 4.

With respect to adhesion, the results demonstrated that no detachment of the film at the flange was observed in both front and back sides and that the can had satisfactory adhesion. In the corrosion resistance test, the results demonstrated that amounts of iron eluted were 0.10 ppm (front side) and 0.11 ppm (back side) at a thickness of 5 $\mu$m. The results demonstrated that amounts of iron eluted were 0.05 ppm (front side) and 0.05 ppm (back side) at a thickness of 10 $\mu$m. That is, excellent corrosion resistance was obtained.

EXAMPLE 8 (REFERENCE - NOT IN ACCORDANCE WITH INVENTION)

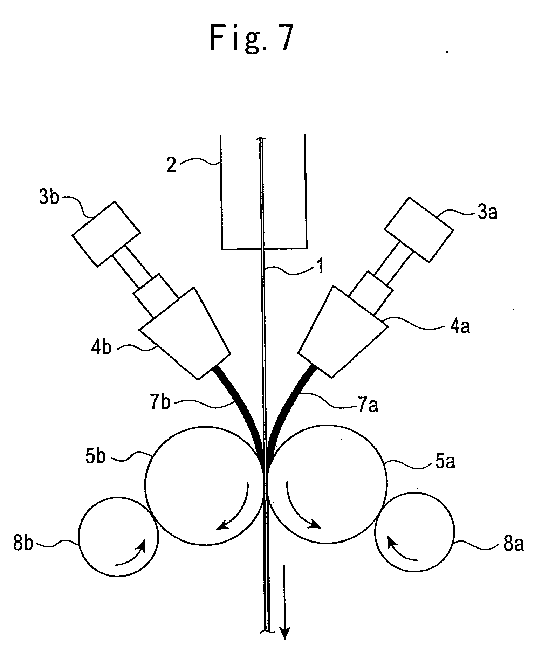

Fig. 7 shows the placement of an apparatus used in another embodiment of the present invention. Referring to Fig. 7, at least one roller 5a or 5b is disposed for each side of the metal sheet 1. Backup rollers 8a and 8b corresponding to the roller 5a and 5b, respectively, are disposed. The other structure is the same as in Fig. 5. Therefore, the same elements are designated using the same reference numerals, and redundant description is not repeated.

Each of the rollers 5a and 5b is a DLC-coated metal roller. The surface free energy of the surface of each roller was 40 mN/m. The adjustment of each roller was performed by a method in which DLC was directly deposited on the periphery of each roller by plasma-enhanced chemical vapor deposition (CVD). First, the surface of each metal roller was cleaned by sandblasting. The resulting metal roller was placed in a vacuum chamber. Acetylene was used as a source gas. The thickness was 0.01 $\mu$m. Each backup roller is a temperature-controllable metal roller. A steel sheet subjected to electrolytic chromic acid treatment and having a thickness of 0.2 mm and a width of 900 mm was used as the metal sheet 1. A polyethylene terephthalate resin (IV = 0.73) was used as the thermoplastic resin 7 applied to each side.

The line speed was set at 250 mpm. The temperature of polyethylene terephthalate resin extruded from the T-die was set at 290°C. When the lamination thickness was set at 5 $\mu$m, the roll force of the heated roller was adjusted to 104 T (for a width of 900 mm). When the lamination thickness was set at 10 $\mu$m, the roll force of the heated roller was adjusted to 85 T (for a width of 900 mm). The surface temperature of each of the rollers and the backup rollers was adjusted to 180°C.

Referring to Fig. 7, the polyethylene terephthalate resin can be laminated on both sides of the metal sheet 1. In the resulting laminated metal sheets, each resin layer was not broken. On variations in the thickness of the resin layer having a thickness of 10 $\mu$m, while a standard deviation in EXAMPLE 6 was 1.3 $\mu$m, a standard deviation in EXAMPLE 8 was as small as 0.4 $\mu$m. That is, excellent standard deviation was obtained in EXAMPLE 8. Adhesion and corrosion resistance of each laminated metal sheet were evaluated as in EXAMPLE 4, provided that the evaluation was performed for both front and back sides. With respect to adhesion, the results demonstrated that no detachment of the film at the flange was observed in both front and back sides and that the can had satisfactory adhesion. In the corrosion resistance test, the results demonstrated that amounts of iron eluted were 0.07 ppm (front side) and 0.07 ppm (back side) at a thickness of 5 $\mu$m. The results demonstrated that amounts of iron eluted were 0.03 ppm (front side) and 0.03 ppm (back side) at a thickness of 10 $\mu$m. That is, excellent corrosion resistance was obtained.

EXAMPLE 9

The apparatus shown in Fig. 5 was used. Resin layers were laminated by the above-described method on both sides of a TFS sheet having a thickness of 0.18 mm, a temper grade of DR9, 80 mg/m$^2$ of a metal chromium layer, and 15 mg/m$^2$ of a chromium oxide layer (in terms of metal chromium) (INVENTIVE EXAMPLES 1 to 10 and COMPARATIVE EXAMPLES 1 to 4). In this case, an induction heating metal roller having satisfactory temperature controllability was used as each of the metal rollers. The line speed was set at 200 mpm. The temperature during lamination, the thickness of each resin layer, and the roll force of each metal roller were adjusted. After lamination, the resulting sheet was cooled to room temperature with a cooling unit (not shown) disposed downstream of the heated roller, dried, and wound.

Various low-viscosity resins and an isophthalic acid-modified polyethylene terephthalate copolymer resin (IP121B, manufactured by Kanebo Gosen Co., Ltd., the ratio of terephthalic acid to isophthalic acid = 90:10) were used as thermoplastic resins. The resins were cold-blended with a polyester resin using a tumbler blender at a compounding ratio shown in Table 1, melt-kneaded with twin-screw extruders at 260°C, and extruded from the T-dies.

The low-viscosity resins used were described below.

1) T1: polyester elastomer (MFR = 11), Primalloy A1500N, manufactured by Mitsubishi Chemical Corporation
2) E2: HDPE (MFR = 12), Hi-Zex 1300J, manufactured by Prime Polymer Co., Ltd.

3) E3: LLDPE (MFR = 25), Neo-Zex 2074G, manufactured by Prime Polymer Co., Ltd.
4) M4: ethylene-methacrylic acid copolymer (MFR = 7), (Nucrel N1207C, manufactured by Du Pont-Mitsui Polychemicals Co., Ltd.)
5) M5: ethylene-methacrylic acid copolymer (MFR = 14), (Nucrel N1214, manufactured by Du Pont-Mitsui Polychemicals Co., Ltd.)
6) M6: ethylene-methacrylic acid copolymer (MFR = 25), (Nucrel N1525, manufactured by Du Pont-Mitsui Polychemicals Co., Ltd.)
7) M7: ethylene-methacrylic acid copolymer neutralized with Zn (MFR = 16), (Himilan 1702, manufactured by Du Pont-Mitsui Polychemicals Co., Ltd.)
8) M8: ethylene-methacrylic acid copolymer neutralized with Zn (MFR = 5), (Himilan 1705, manufactured by Du Pont-Mitsui Polychemicals Co., Ltd.)

The resulting laminated metal sheets were formed into cans by the following method and were subjected to strain-relief heat treatment to form thin-walled deep-drawn cans.

(1) Can Manufacturing Process

The above-described laminated metal sheets were subjected to primary drawing and then redrawing to produce thin-walled deep-drawn cans.

· Primary Drawing

Blank diameter: 150 to 160 mm
Drawing ratio: 1.65

· Redrawing

Primary redrawing: Drawing ratio = 1.25
Secondary redrawing: Drawing ratio = 1.25
Radius of curvature at corner of die in redrawing step: 0.4 mm
Blank holding force in redrawing: 39,227 N (4,000 kg) ·Average Thickness Reduction Ratio at Can Body
40% to 55% with respect to thickness of resin-laminated metal sheet before processing

(2) Strain-Relief Heat Treatment

Processing strain developed in the resin layers during can production was eliminated by heating the cans to 220°C for 30 seconds and then rapidly cooling the cans.
Processability, impact resistance, and adhesion after processing of the resin layers of the thin-walled deep-drawn cans were evaluated by the following method.

(i) Processability

The limit of a processing ratio (thickness reduction ratio) when can production can be performed without damage of the resin layers was evaluated according to the following criteria. The laminated metal sheet was accepted when the sheet can be processed at a thickness reduction ratio of 45% or more (evaluation: "fair" or higher).

Unprocessable at a thickness reduction ratio of 40%: "Terrible"

Processable at a thickness reduction ratio of 40%: "Poor"

Processable at a thickness reduction ratio of 45%: "Fair"

Processable at a thickness reduction ratio of 50%: "Good"

Processable at a thickness reduction ratio of 55%: "Excellent"

(ii) Impact Resistance

A can (thickness reduction ratio: 50%) subjected to strain-relief heat treatment was subjected to neck forming. The can body was filled with distilledwater. A lid was attached and seamed. An impact was applied to the bottom of the can by dropping an iron ball having a weight of 0.5 kg from a height of 30 cm. The lid was opened. The can was filled with a 1% sodium chloride solution in such a manner that an impacted portion was immersed. Five minutes after immersion, a load of 6 V was applied between a platinum electrode immersed in the solution and a metal portion of the can. After another one minute, a current was measured. Evaluation was performed according to the following criteria. The can was accepted when the current is less than 10 mA (evaluation: "fair" or higher).

A current of 30 mA or more: "Terrible"
A current of 10 mA or more and less than 30 mA: "Poor"
A current of 5 mA or more and less than 10 mA: "Fair"
A current of 1 mA or more and less than 5 mA: "Good"
A current of less than 1 mA: "Excellent"

(iii) Adhesion after Processing

The inside of the can subjected to strain-relief heat treatment was washed. The can was immersed in an aqueous solution of 1.5 percent by mass of citric acid and 1.5 percent by mass of sodium chloride for 24 hours. Then the length of the resin detached at the end of the can was observed. Evaluation was performed according to the following criteria. The can was accepted when the length of the resin detached was 5 mm or less (evaluation: "fair" or higher).

A length of resin detached exceeding 10 mm: "Terrible"
A length of resin detached above 5 mm and 10 mm or less: "Poor"
A length of resin detached above 2 mm and 5 mm or less: "Fair"
A length of resin detached of 2 mm or less: "Good"
No detachment was observed: "Excellent"

Table 2 shows the results.
Referring to Table 2, it was revealed that the resin layers in INVENTIVE EXAMPLES 1 to 10 each have a small number of defects, satisfactory uniformity, satisfactory processability, and satisfactory adhesion after processing. In the case of the carboxylic acid-modified polyolefin resin, excellent impact resistance is achieved. In contrast, most of the resin layers in COMPARATIVE EXAMPLES 1 to 4 have inferior processability, inferior heat resistance, and inferior adhesion after processing.
As described above, according to the method of the present invention, the uniform thin resin layer is formed without the rupture of the resin layer or the occurrence of neck-in even when the lamination speed is increased to an unprecedented speed. Furthermore, the method is a simple lamination, thus reducing production costs.

Table 2

| | Resin added | | | | Thickness of resin layer ($\mu$m) | Lamination condition | | Evaluation of thin-walled deep-drawn can | | |
|---|---|---|---|---|---|---|---|---|---|---|
| | Type of resin | MFR | Ratio by mass of carboxylic acid-modified monomer (mass %) | Amount added in total amount of resin (mass %) | | Temperature (°C) | Pressing load of metal roller (ton) | Processability | Impact resistance | Adhesion after processing |
| INVENTIVE EXAMPLE 1 | T1 | 11 | 0 | 15 | 10 | 255 | 80 | Fair | Fair | Fair |
| INVENTIVE EXAMPLE 2 | E2 | 12 | 0 | 15 | 10 | 255 | 75 | Good | Fair | Fair |
| INVENTIVE EXAMPLE 3 | E3 | 25 | 0 | 15 | 10 | 255 | 70 | Good | Fair | Good |
| INVENTIVE EXAMPLE 4 | M4 | 7 | 12 | 15 | 10 | 255 | 80 | Excellent | Excellent | Good |
| INVENTIVE EXAMPLE 5 | M5 | 14 | 12 | 8 | 10 | 255 | 75 | Excellent | Excellent | Good |
| INVENTIVE EXAMPLE 6 | M5 | 14 | 12 | 20 | 10 | 255 | 75 | Excellent | Excellent | Good |
| INVENTIVE EXAMPLE 7 | M5 | 14 | 12 | 20 | 5 | 255 | 90 | Excellent | Good | Good |
| INVENTIVE EXAMPLE 8 | M5 | 14 | 12 | 30 | 10 | 255 | 75 | Excellent | Excellent | Good |
| INVENTIVE EXAMPLE 9 | M6 | 25 | 15 | 15 | 10 | 255 | 65 | Excellent | Excellent | Excellent |
| INVENTIVE EXAMPLE 10 | M7 | 16 | 17 | 15 | 10 | 255 | 75 | Good | Excellent | Good |
| COMPARATIVE EXAMPLE 1 | None | - | - | - | 10 | 255 | 90 | Terrible | Terrible | Terrible |
| COMPARATIVE EXAMPLE 2 | M5 | 14 | 12 | 3 | 10 | 255 | 75 | Poor | Poor | Terrible |
| COMPARATIVE EXAMPLE 3 | M5 | 14 | 12 | 35 | 10 | 255 | 75 | Poor | Fair | Terrible |

(continued)

| | Resin added | | | | Thickness of resin layer ($\mu$m) | Lamination condition | | Evaluation of thin-walled deep-drawn can | | |
|---|---|---|---|---|---|---|---|---|---|---|
| | Type of resin | MFR | Ratio by mass of carboxylic acid-modified monomer (mass %) | Amount added in total amount of resin (mass %) | | Temperature (°C) | Pressing load of metal roller (ton) | Processability | Impact resistance | Adhesion after processing |
| COMPARATIVE EXAMPLE 4 | M8 | 5 | 17 | 15 | 10 | 255 | 85 | Poor | Good | Terrible |

Industrial Applicability

According to the method of the present invention, a laminated metal sheet including a uniform thin resin layer is stably produced without the rupture of the resin layer or the occurrence of neck-in even at a high line speed. Furthermore, the method is a simple lamination, thus reducing production costs. The laminated metal sheet is suitable as a material for use in containers for foods and chemical agents, construction materials used for interior panels, home electric appliances, and automotive parts. The laminated metal sheet should be used for various applications.

**Claims**

1.  A method for producing a laminated metal sheet, comprising a step of causing a molten resin (7a, 7b) to pass through a nipped area of a metal sheet (1) being transported in association with rotation of a roller (5a, 5b), wherein the metal sheet (1) is transported downward in a substantially vertical direction, **characterized in that** the resin (7a, 7b) is a polyester containing 5 to 30 percent by mass of a resin having a melt flow rate measured according to JIS K7210 of 6 g/10 min or more.

2.  The method for producing a laminated metal sheet according to claim 1, further comprising a step of heating the metal sheet (1) before the metal sheet (1) passes through the nipped area.

3.  The method for producing a laminated metal sheet according to any one of claim 1 or 2, wherein the thickness of the resin (7a, 7b) of the laminated metal sheet is controlled by the pressing load of the roller (5a, 5b) at the nipped area.

4.  The method for producing a laminated metal sheet according to any one of claims 1 to 3, further comprising a step of cooling the laminated metal sheet after the laminated metal sheet passes through the nipped area.

5.  The method for producing a laminated metal sheet according to any one of claims 1 to 4, wherein the roller (5a, 5b) is a metal roller capable of having a surface temperature thereof controlled.

6.  The method for producing a laminated metal sheet according to any one of claims 1 to 5, wherein the surface free energy of the roller (5a, 5b) is 45 mN/m or less.

7.  The method for producing a laminated metal sheet according to any one of claims 1 to 6, wherein the surface of the roller (5a, 5b) is composed of a material mainly containing at least one selected from the group consisting of resins and carbon.

8.  The method for producing a laminated metal sheet according to any one of claims 1 to 7, wherein the surface of the roller (5a, 5b) is composed of at least one material selected from the group consisting of silicone resins, fluorocarbon resins, and diamond-like carbon.

9.  The method for producing a laminated metal sheet according to any one of claims 1 to 8, further comprising a step of heating the roller (5a, 5b).

10. The method for producing a laminated metal sheet according to claim 9, wherein the surface temperature of the roller (5a, 5b) is set at a temperature equal to or higher than the glass transition temperature of the resin (7a, 7b).

11. The method for producing a laminated metal sheet according to claim 9, wherein the surface temperature of the roller (5a, 5b) is set at a temperature equal to or higher than the melting point of the resin (7a, 7b).

12. The method for producing a laminated metal sheet according to claim 9, wherein the surface temperature of the roller (5a, 5b) is set at a temperature in the range of the glass transition temperature of the resin (7a, 7b) to the melting point of the resin (7a, 7b).

13. The method for producing a laminated metal sheet according to any one of claims 1 to 12, further comprising a step of pressing a temperature-controlled metal roller (8a, 8b) against the roller (5a, 5b) so as to control the surface temperature of the roller (5a, 5b).

14. The method for producing a laminated metal sheet according to any one of claims 1 to 13, wherein the melt viscosity of the resin (7a, 7b) is $10^3$ Pa·s or less.

15. The method for producing a laminated metal sheet according to claim 1, wherein the resin having a melt flow rate of 6 g/10 min or more is a resin mainly composed of a polyolefin.

16. The method for producing a laminated metal sheet according to claim 15, wherein the polyolefin is a polyolefin modified by a carboxylic acid derivative.

17. The method for producing a laminated metal sheet according to any one of claims 1 to 16, wherein at least one roller (5a, 5b) is disposed for each side of the metal sheet (1).

18. The method for producing a laminated metal sheet according to any one of claims 1 to 17, wherein the metal sheet (1) is nipped by at least one pair of rollers (5a, 5b).

19. The method for producing a laminated metal sheet according to claim 18, wherein the metal sheet (1) is nipped by the at least one pair of rollers (5a, 5b), and at least one surface of the metal sheet (1) is laminated.

20. The method for producing a laminated metal sheet according to any one of claims 1 to 17, wherein the metal sheet (1) is nipped by at least one roller (6) and a rigid body (11).

21. The method for producing a laminated metal sheet according to claim 20, wherein the metal sheet (1) is nipped by the at least one roller (6) and the rigid body (11), and at least one surface of the metal sheet (1) is laminated.

**Patentansprüche**

1. Verfahren zur Herstellung eines laminierten Metallblechs, das einen Schritt umfasst, in dem bewirkt wird, dass ein geschmolzenes Harz (7a, 7b) durch einen Walzenspaltbereich eines Metallblechs (1), das in Verbindung mit der Rotation einer Walze (5a, 5b) transportiert wird, geführt wird, worin das Metallblech (1) abwärts in einer im wesentlichen vertikalen Richtung transportiert wird, **dadurch gekennzeichnet, dass** das Harz (7a, 7b) ein Polyester ist, der 5 bis 30 Masse% eines Harzes mit einer Schmelzflussrate, gemessen gemäß JIS K7210, von 6 g/10 min. oder mehr enthält.

2. Verfahren zur Herstellung eines laminierten Metallblechs gemäß Anspruch 1, das weiterhin einen Schritt umfasst, in dem das Metallblech (1) erwärmt wird, bevor das Metallblech (1) den Walzenspaltbereich durchläuft.

3. Verfahren zur Herstellung eines laminierten Metallblechs gemäß irgendeinem der Ansprüche 1 oder 2, worin die Dicke des Harzes (7a, 7b) des laminierten Metallblechs durch die Andrucklast der Walze (5a, 5b) im Walzenspaltbereich gesteuert wird.

4. Verfahren zur Herstellung eines laminierten Metallblechs gemäß irgendeinem der Ansprüche 1 bis 3, das weiterhin einen Schritt umfasst, in dem das laminierte Metallblech gekühlt wird, nachdem das laminierte Metallblech den Walzenspaltbereich durchläuft.

5. Verfahren zur Herstellung eines laminierten Metallblechs gemäß irgendeinem der Ansprüche 1 bis 4, worin die Walze (5a, 5b) eine Metallwalze ist, die dafür geeignet ist, dass ihre Oberflächentemperatur gesteuert wird.

6. Verfahren zur Herstellung eines laminierten Metallblechs gemäß irgendeinem der Ansprüche 1 bis 5, worin die freie Oberflächenengerie der Walze (5a, 5b) 45 mN/m oder weniger ist.

7. Verfahren zur Herstellung eines laminierten Metallblechs gemäß irgendeinem der Ansprüche 1 bis 6, worin die Oberfläche der Walze (5a, 5b) aus einem Material aufgebaut ist, das hauptsächlich mindestens eines ausgewählt aus der Gruppe bestehend aus Harzen und Kohlenstoff enthält.

8. Verfahren zur Herstellung eines laminierten Metallblechs gemäß irgendeinem der Ansprüche 1 bis 7, worin die Oberfläche der Walze (5a, 5b) aus mindestens einem Material aufgebaut ist, das aus der Gruppe bestehend aus Silikonharzen, Fluorkohlenstoffharzen und Diamantähnlichem Kohlenstoff ausgewählt ist.

**9.** Verfahren zur Herstellung eines laminierten Metallblechs gemäß irgendeinem der Ansprüche 1 bis 8, das weiterhin einen Schritt des Erwärmens der Walze (5a, 5b) umfasst.

**10.** Verfahren zur Herstellung eines laminierten Metallblechs gemäß Anspruch 9, worin die Oberflächentemperatur der Walze (5a, 5b) auf eine Temperatur eingestellt ist, die gleich oder größer als die Glasübergangstemperatur des Harzes (7a, 7b) ist.

**11.** Verfahren zur Herstellung eines laminierten Metallblechs gemäß Anspruch 9, worin die Oberflächentemperatur der Walze (5a, 5b) auf eine Temperatur eingestellt ist, die gleich oder größer als der Schmelzpunkt des Harzes (7a, 7b) ist.

**12.** Verfahren zur Herstellung eines laminierten Metallblechs gemäß Anspruch 9, worin die Oberflächentemperatur der Walze (5a, 5b) auf eine Temperatur eingestellt ist, die im Bereich von der Glasübergangstemperatur des Harzes (7a, 7b) bis zum Schmelzpunkt des Harzes (7a, 7b) liegt.

**13.** Verfahren zur Herstellung eines laminierten Metallblechs gemäß irgendeinem der Ansprüche 1 bis 12, das weiterhin einen Schritt umfasst, in dem eine temperaturgeregelte Metallwalze (8a, 8b) gegen die Walze (5a, 5b) gepresst wird, um die Oberflächentemperatur der Walze (5a, 5b) zu steuern.

**14.** Verfahren zur Herstellung eines laminierten Metallblechs gemäß irgendeinem der Ansprüche 1 bis 13, worin die Schmelzviskosität des Harzes (7a, 7b) $10^3$ Pa·s oder weniger ist.

**15.** Verfahren zur Herstellung eines laminierten Metallblechs gemäß Anspruch 1, worin das Harz, das eine Schmelzflussrate von 6 g/10 min. aufweist, ein Harz ist, das sich hauptsächlich aus einem Polyolefin zusammensetzt.

**16.** Verfahren zur Herstellung eines laminierten Metallblechs gemäß Anspruch 15, worin das Polyolefin ein durch ein Carbonsäurederivat modifiziertes Polyolefin ist.

**17.** Verfahren zur Herstellung eines laminierten Metallblechs gemäß irgendeinem der Ansprüche 1 bis 16, worin mindestens eine Walze (5a, 5b) für jede Seite des Metallblechs (1) bereitgestellt ist.

**18.** Verfahren zur Herstellung eines laminierten Metallblechs gemäß irgendeinem der Ansprüche 1 bis 17, worin das Metallblech (1) durch mindestens ein Paar von Walzen (5a, 5b) eingeklemmt wird.

**19.** Verfahren zur Herstellung eines laminierten Metallblechs gemäß Anspruch 18, worin das Metallblech (1) durch mindestens ein Paar von Walzen (5a, 5b) eingeklemmt wird, und mindestens eine Oberfläche des Metallblechs (1) laminiert wird.

**20.** Verfahren zur Herstellung eines laminierten Metallblechs gemäß irgendeinem der Ansprüche 1 bis 17, worin das Metallblech (1) durch mindestens eine Walze (6) und einen starren Körper (11) eingeklemmt wird.

**21.** Verfahren zur Herstellung eines laminierten Metallblechs gemäß Anspruch 20, worin das Metallblech (1) durch mindestens eine Walze (6) und einen starren Körper (11) eingeklemmt wird, und mindestens eine Oberfläche des Metallblechs (1) laminiert wird.

**Revendications**

**1.** Procédé destiné à produire une feuille métallique laminée, comprenant une étape qui consiste à amener une résine fondue (7a, 7b) à passer à travers une zone pincée d'une feuille métallique (1) étant transportée en association avec la rotation d'un rouleau (5a, 5b), dans lequel la feuille métallique (1) est transportée vers le bas dans une direction substantiellement verticale, **caractérisé en ce que** la résine (7a, 7b) est un polyester contenant 5 à 30 pour cent en masse d'une résine ayant un indice de fluidité à chaud mesuré selon la norme JIS K7210 de 6 g/10 min ou plus.

**2.** Procédé destiné à produire une feuille métallique laminée selon la revendication 1, comprenant en outre une étape qui consiste à chauffer la feuille métallique (1) avant que la feuille métallique (1) ne passe à travers la zone pincée.

**3.** Procédé destiné à produire une feuille métallique laminée selon l'une quelconque des revendications 1 ou 2, dans lequel l'épaisseur de la résine (7a, 7b) de la feuille métallique laminée est commandée par la charge de pression du rouleau (5a, 5b) au niveau de la zone pincée.

4. Procédé destiné à produire une feuille métallique laminée selon l'une quelconque des revendications 1 à 3, comprenant en outre une étape qui consiste à refroidir la feuille métallique laminée après que la feuille métallique laminée passe à travers la zone pincée.

5. Procédé destiné à produire une feuille métallique laminée selon l'une quelconque des revendications 1 à 4, dans lequel le rouleau (5a, 5b) est un rouleau métallique capable d'avoir une température de surface commandée correspondante.

6. Procédé destiné à produire une feuille métallique laminée selon l'une quelconque des revendications 1 à 5, dans lequel l'énergie libre de surface du rouleau (5a, 5b) est inférieure ou égale à 45 mN/m.

7. Procédé destiné à produire une feuille métallique laminée selon l'une quelconque des revendications 1 à 6, dans lequel la surface du rouleau (5a, 5b) est composée d'un matériau contenant essentiellement au moins un élément choisi dans le groupe constitué de résines et de carbone.

8. Procédé destiné à produire une feuille métallique laminée selon l'une quelconque des revendications 1 à 7, dans lequel la surface du rouleau (5a, 5b) est composée d'au moins un matériau choisi dans le groupe constitué de résines de silicone, de résines de fluorocarbone, et de carbone sous forme de diamant amorphe.

9. Procédé destiné à produire une feuille métallique laminée selon l'une quelconque des revendications 1 à 8, comprenant en outre une étape qui consiste à chauffer le rouleau (5a, 5b).

10. Procédé destiné à produire une feuille métallique laminée selon la revendication 9, dans lequel la température de surface du rouleau (5a, 5b) est réglée à une température supérieure ou égale à la température de transition vitreuse de la résine (7a, 7b).

11. Procédé destiné à produire une feuille métallique laminée selon la revendication 9, dans lequel la température de surface du rouleau (5a, 5b) est réglée à une température supérieure ou égale au point de fusion de la résine (7a, 7b).

12. Procédé destiné à produire une feuille métallique laminée selon la revendication 9, dans lequel la température de surface du rouleau (5a, 5b) est réglée à une température dans la plage allant de la température de transition vitreuse de la résine (7a, 7b) au point de fusion de la résine (7a, 7b).

13. Procédé destiné à produire une feuille métallique laminée selon l'une quelconque des revendications 1 à 12, comprenant en outre une étape qui consiste à presser un rouleau métallique à température commandée (8a, 8b) contre le rouleau (5a, 5b) de manière à commander la température de surface du rouleau (5a, 5b).

14. Procédé destiné à produire une feuille métallique laminée selon l'une quelconque des revendications 1 à 13, dans lequel la viscosité à l'état fondu de la résine (7a, 7b) est inférieure ou égale à $10^3$ Pa.s.

15. Procédé destiné à produire une feuille métallique laminée selon la revendication 1, dans lequel la résine ayant un indice de fluidité à chaud supérieur ou égal à 6 g/10 min est une résine composée essentiellement d'une polyoléfine.

16. Procédé destiné à produire une feuille métallique laminée selon la revendication 15, dans lequel la polyoléfine est une polyoléfine modifiée par un dérivé d'acide carboxylique.

17. Procédé destiné à produire une feuille métallique laminée selon l'une quelconque des revendications 1 à 16, dans lequel au moins un rouleau (5a, 5b) est disposé de chaque côté de la feuille métallique (1).

18. Procédé destiné à produire une feuille métallique laminée selon l'une quelconque des revendications 1 à 17, dans lequel la feuille métallique (1) est pincée par au moins une paire de rouleaux (5a, 5b).

19. Procédé destiné à produire une feuille métallique laminée selon la revendication 18, dans lequel la feuille métallique (1) est pincée par l'au moins une paire de rouleaux (5a, 5b), et au moins une surface de la feuille métallique (1) est laminée.

**20.** Procédé destiné à produire une feuille métallique laminée selon l'une quelconque des revendications 1 à 17, dans lequel la feuille métallique (1) est pincée par au moins un rouleau (6) et un corps rigide (11).

**21.** Procédé destiné à produire une feuille métallique laminée selon la revendication 20, dans lequel la feuille métallique (1) est pincée par l'au moins un rouleau (6) et le corps rigide (11), et au moins une surface de la feuille métallique (1) est laminée.

# Fig. 1

Fig. 2

Fig. 3

# Fig. 4

# Fig. 5

# Fig. 6

# Fig. 7

**EP 1 897 670 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 57203545 A
- JP 10138315 A
- JP 10138316 A
- JP 2001121647 A
- US 5985080 A